# EUROPEAN PATENT APPLICATION

(11) **EP 3 113 042 A1**
(43) Date of publication of application: **04.01.2017**
(21) Application number: 15306068.6
(22) Date of filing: 01.07.2015
(51) Int. Cl.: G06F 17/30

(54) **A METHOD FOR PROVIDING CONTEXTUAL INFORMATION, AN INFORMATION PROCESSING SYSTEM AND A COMPUTER PROGRAM PRODUCT**

(71) Applicant: ALCATEL LUCENT, 92100 Boulogne-Billancourt (FR)
(72) Inventor: KARNSTEDT, Marcel, Dublin, 15 (IE); AJWANI, Deepak, Dublin, 15 (IE); MAI, Tiep, Dublin, 15 (IE); SALA, Alessandra, Dublin, 15 (IE)
(74) Representative: Bryers LLP

(57) **Abstract**

A method for providing contextual information for a query from input data deriving from multiple heterogeneous sources, the method comprising generating an undirected graph representing relationships between multiple data objects of the input data, storing the graph in a persistent, scalable database, processing the input data to generate semantic and/or meta data relating to the multiple data objects, and augmenting the graph to include additional nodes and/or edges representing relationships between the semantic and/or meta data and the data objects, and monitoring the multiple heterogeneous data sources to dynamically update the graph.

## Description

### TECHNICAL FIELD

Aspects relate, in general, to a method for providing contextual information, an information processing system and a computer program product.

### BACKGROUND

Contextual information can be used for a wide variety of applications, and can generally be characterized as information that is relevant to an understanding of something. For example, traditionally, context includes information about a location and its surrounding environment, the identity of things named in a text such as people, places, books, and so on. However, other types of information promise to be of as much or even greater benefit for next-generation communication services.

Typically, systems for managing and providing rich contextual information use a limited number of homogeneous data sources. Data from the sources is pre-processed in order to enable contextual information to be mined.

### SUMMARY

According to an example, there is provided a method for providing contextual information for a query from input data deriving from multiple heterogeneous sources, the method comprising generating an undirected graph representing relationships between multiple data objects of the input data, storing the graph in a persistent, scalable database, processing the input data to generate semantic and/or meta data relating to the multiple data objects, and augmenting the graph to include additional nodes and/or edges representing relationships between the semantic and/or meta data and the data objects, and monitoring the multiple heterogeneous data sources to dynamically update the graph. The method can further comprise determining data objects representing nodes for the graph, wherein a data object is a source of data comprising a document, person or event. For various (such as all or selected ones) textual data sources, meta-information can be extracted from the text and used to integrate the information from these sources in the graph. Multiple data objects can be linked with weighted edges to represent a relationship between data objects. The method can further include determining, on-demand and in real-time, a set of paths between multiple nodes relating to the query, respective paths representing differing contextual information for the query. A sub-graph for the multiple nodes relating to the query can be determined, and the sub-graph can be mined or processed in real-time to provide the contextual information for the query. For example, a path between nodes representing the query can be selected based on the weight of the path relative to weights of other paths between the nodes. In an example, the path with the lowest weight represents the most relevant context for the query.

The respective paths of the sub-graph and/or edges between nodes of the sub-graph can be weighted. A weight assigned to a path of the sub-graph and/or an edge between nodes of the sub-graph can be a predetermined constant value or calculated using a variable function relating to the content of or a parameter associated with one or more data objects. A probability that the content associated with a data object relates to a topic can be calculated. Meta-information such as meta-data can be added to a path and/or edge between nodes of the sub-graph as a node representing a data object is added to the graph. A node can be removed from the graph after a predetermined period of time calculated from a time of addition of the node.

According to an example, there is provided a an information processing system, comprising a processor being operable to receive and process input data deriving from multiple heterogeneous sources of data, generate a query at the time of a communication event, receive a query relating to contextual information associated with the input data, generate an undirected graph representing relationships between multiple data objects of the input data, store the graph in a persistent, scalable database, process the input data to generate semantic and/or meta data relating to the multiple data objects, and modify the graph to include additional nodes and/or edges representing relationships between the semantic and/or meta data and the data objects, monitor the multiple heterogeneous data sources to dynamically update the graph. The processor is further operable to determine a set of paths between multiple nodes relating to the query, respective paths representing differing contextual information for the query on demand in real-time. The processor is further operable to determine a sub-graph for the multiple nodes relating to the query, and process the sub-graph to provide the contextual information for the query by selecting a path according to an assigned weight for respective ones of the paths and/or edges between nodes in the sub-graph on-demand in real-time

According to an example, there is provided a computer program product, comprising a computer usable medium having computer readable program code embodied therein, said computer readable program code adapted to be executed to implement a method for providing contextual information as provided herein.

### BRIEF DESCRIPTION OF THE DRAWINGS

Embodiments will now be described, by way of example only, with reference to the accompanying drawings, in which:
Figure 1a is a schematic representation of a system according to an example;
Figure 1b is a schematic representation of a system according to an example;
Figure 1c is a schematic representation of a distributing storage system according to an example.
Figures 2a-e are schematic representations of the determination of a subgraph for an input query according to an example;
Figure 3 is a schematic representation of a simplified example network that illustrates the approach according to an example; and
Figures 4, 5 and 6 are schematic representations of different contexts derived based on different weights according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

In order to leverage the full potential of contextual information, a system is provided that utilizes multiple heterogeneous data sources, and which is able to sift through data in real time to provide contextual information.

Existing solutions are limited in several ways. On the one hand, they often limit the number of data sources that are considered. This eases integration efforts and reduces the load for computing contextual information, but in parallel significantly limits the benefit one can gain from this information. On the other hand, contextual information is typically pre-computed and pre-selected. This allows for efficient and fast retrieval of contextual information at the time it is needed. This approach is incapable of considering the nature of the actual event and the exact circumstances at query time in order to decide about the nature and relevance of different contextual facts.

According to an example, there is provided a method for providing contextual information for a query from input data deriving from multiple heterogeneous sources that offers flexible support for on-the-fly integration of data from an *a priori* unlimited variety of heterogeneous sources, whilst facilitating enhancement of this data by integrating additionally inferred metadata that can enrich the derived contextual information even further and which supports the searching, filtering, extraction and ranking of complex contextual information from the resulting rich set of facts and meta-facts on demand and in real time. That is, a method and system according to an example offers real-time provisioning of contextual knowledge that users require at the time of a communication for example.

According to an example, there is provided a method and system for the management and real-time extraction of contextual information that can be used with next-generation communication and middleware systems for example.

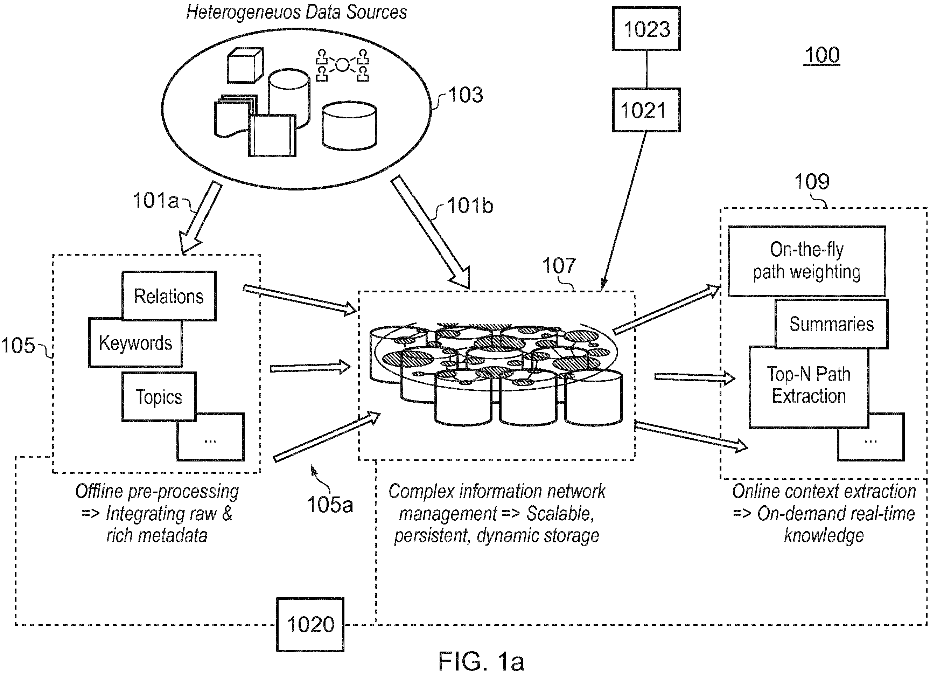

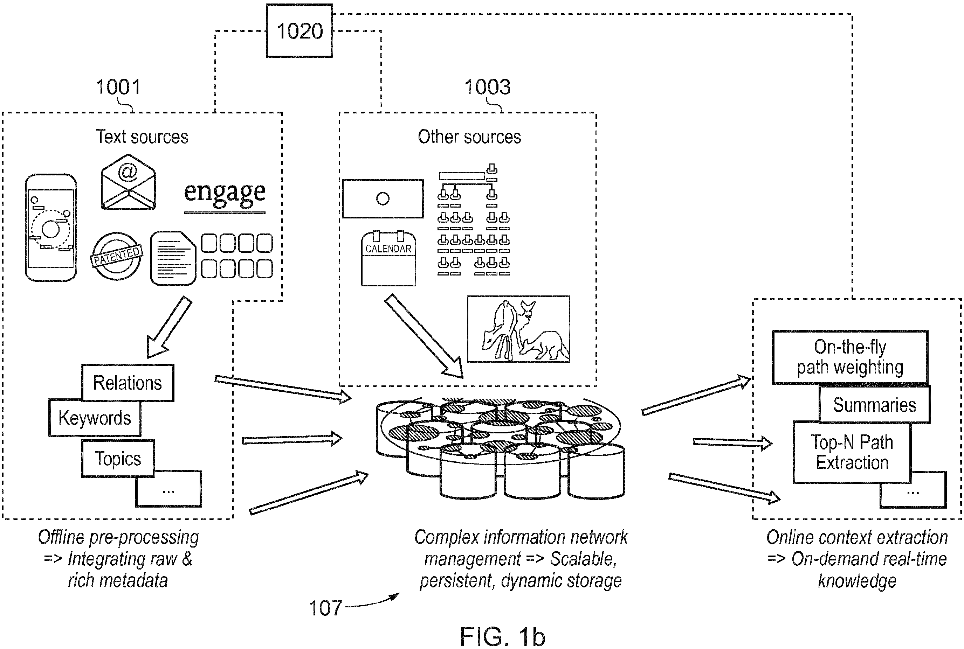

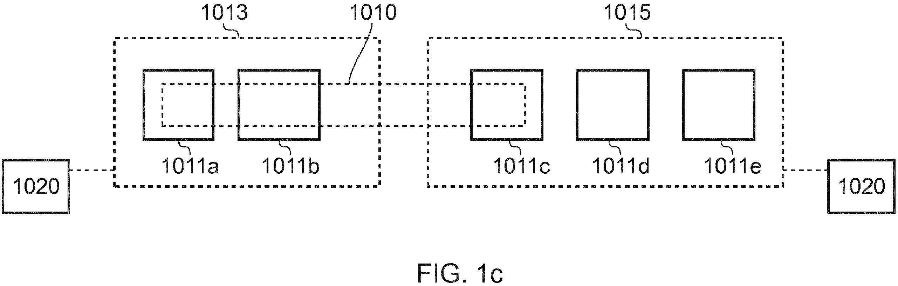

Figure 1 a is a schematic representation of a system according to an example. Contextual information is provided in the form of a set of paths and sub-graphs of a complex information network/graph. The network approach supports integration of a wide variety of implicit and explicit data from a multitude of relevant heterogeneous sources 103, thereby breaking the inflexibility of existing solutions regarding considered sources. Further automated enrichment of these data is provided by inferred semantic information and meta-data to identify additional relationships, and real-time weighting and ranking of contextual information to focus on relevant data at query time.

Applying real-time weighting accommodates the fact that the outcome of the ranking process is influenced by the characteristics of the communication event. Information about a data event can include extracted (i.e. explicit, such as email header) or inferred (i.e. implicit, such as inferred topic of the email) data. For example, two incoming emails arriving at exactly the same time from the same person can result in the extraction of different contextual information depending on the emails' subject and topic. As such, it is desirable for this step to be processed in real time and on demand in order to

In a system 100 as depicted in figure 1a, an offline pre-processing engine 105 analyses data 101a from the input sources 103 and infers additional semantic information and meta-data, such as topics from this data. As such, the component 105 enriches the available data in order to infer and reveal hidden relations between the entities involved in a communication event. This offers a way to enrich the data about entities that are part of the communication system. While generally occurring in an offline mode of operation, the component 105 can combine batch processing with incremental approaches in order to support prompt availability of inferred information. Many of the applied techniques for this purpose have already been proposed in academic literature, although certain tailored extensions may be required. For example, many existing methods are designed for longer texts written in rather formal language (e.g., scientific publications). For a system working on messages, these methods can be extended to handle short messages with often informal and colloquial language. The methods are very scalable and can process any text in real time. There are no well-established techniques that combine all of these characteristics.

An information network management component 107 receives (generally differently structured) data 101b from the heterogeneous input sources 103 plus the inferred data 105a from the pre-processing component 105, which are merged and integrated. Combining all these data into a single information network results in a complex structure that enables a novel and unique opportunity to mine and reason for contextual information relevant for a particular communication event. The component 107 provides functionality for merging, maintaining, updating and managing of the complex, potentially large, network in form of a graph structure.

A processor or processing device 1020 is provided to process data from the data source and/or the components 105, 107 and 109. For example, in the case that the components reside on or over the same physical hardware, processor 1020 can be used to receive and process input data deriving from multiple heterogeneous sources of data 103. A query 1021 relating to a communication event 1023 can be received at the time of the communication event by the system 100. The query 1021 can relate to contextual information associated with the input data. The system 100 can generate an undirected graph representing relationships between multiple data objects of the input data, which is stored in the network management component 107 in the form of a persistent, scalable database. The input data can be processed to generate semantic and/or meta data relating to the multiple data objects, and modify the graph to include additional nodes and/or edges representing relationships between the semantic and/or meta data and the data objects, and monitor the multiple heterogeneous data sources to dynamically update the graph

That is, an input query 1021 for the system 100 can relate to a query for the context between a pair of nodes (data objects), such as the context between a pair of people. By determining a set of paths between the query nodes in the graph, each of which represents a context, the most relevant context can be output. The output can specify the context with which the nodes are linked. For example, if two nodes (people) are linked by a path representing a meeting between two people and this path is determined to provide the most relevant context, for example because it is the most recent event linking the two people, the output can specify that the context in which the two people are linked is by virtue of the meeting.

According to an example, a graph can be generated using known techniques. For example, a set of derived entities from the various data sources is used to create a set of nodes, one for each entity. The entities can be defined at various levels of granularity. For instance, for a chat platform, there can be a node for a chat message or a chat thread, depending on the exact application. For an email platform, a node can relate to a person sending/receiving an email, an email topic, an email or an email thread and so on.

Then, for all relationships extracted from the data sources, edges are formed. The exact definition of what is defined as a node and what becomes an edge depends on the specific application. For instance, Email Messages can be nodes in the graph of one embodiment, while they can be modelled as edges for another embodiment. Further considering the example of an email message, a first node can be an email sender, and second node can be the email recipient. An edge between these nodes can represent the email which provides a contextual link between the nodes (since the sender and recipient are linked by virtue of the fact that an email has passed between them). Another edge may be present between the nodes representing other context that links the nodes. For example, the email sender may be the manager of the email recipient. Alternatively, or in addition, further contextual links may be provided such as the nodes (people) are linked by a common meeting that has occurred or will occur. In general, data that links nodes can take many forms. The edges between nodes can be augmented or provided using meta-data. For example, if the email sender attaches an image to the email, meta-data from the image relating to, for example, the capture location of the image, can be determined by looking at the marked-up header information of the image in order to provide a contextual link between the nodes relating to the location. For example, it may be that the sender and recipient were present at this location when the image was taken. Alternatively for example, the contextual link relating to the location may merely represent the fact the sender and recipient have some common shared interest in the location.

Afterwards, the graph is cleaned by merging nodes that refer to the same entity. This is done by mapping entities between the diverse sources (e.g., from a corporate login in an enterprise to a login on a messenger platform). This step typically requires some domain knowledge of the enterprise organization/user information. For example, two nodes may be present for the same person, representing that person from a corporate and a private perspective. These nodes can be combined to provide a single node for the person, and the relevant edges updated accordingly.

Sometimes, more relationships can be derived between entities to add more edges. For instance, by comparing a data source of corporate login and a corporate social network, the regular users of the social network in a company can be determined and an edge of type "usesInternalSocialNetwork" can be created for those users.

Furthermore, text-processing tools can be used to derive some meta-data from the text source (e.g, chat, email, blog, web-page etc.) such as topics, key-words and the probability that a text belongs to a topic. These topics and key-words are also added as nodes and edges exist between a topic node and a text node (e.g., nodes corresponding to Emails, blogs, chat threads) if the probability that the text belongs to the topic is above a predefined threshold probability.

An online context extraction component 109 is responsible for extracting relations between two entities and ranking them according to their relevance. Unlike in static approaches for providing contextual information, this ranking is influenced by the data available about the involved entities as well as data available about the communication event. The relations are extracted in form of (a combination of) paths from the complex information network provided by the component described above.

Data sources 103 can provide data in the form of chat messages from instant messaging applications, chat sessions and group chats, emails, calendar data and meeting schedules, voice and video calls, documents like papers, patents and internal reports, enterprise social-media data, such as blogs, discussion threads, collaboration portals, etc. and organizational structures like reporting chains for example. The data sources 103 can be any one or more of a user device such as a personal computing device and/or smartphone for example, an enterprise server which may be responsible for processing, transmitting/receiving emails, chat messages and so on (e.g. an Exchange server), a social networking server and so on. The data sources 103 provide heterogeneous data. That is, the nature and/or format of the data 101a, 101b may be different from different data sources 103. For example, an email message may be provided in HTML format, whilst a chat message originating from a user's smartphone for example may be provided in another marked-up format.

According to an example, some data from some sources can be directly inserted into a graph. Other data can be sent through a pre-processing pipeline first. For example, any textual content, which is processed to extract keywords and topics (described in more detail below).

Figure 1b is a schematic representation of a system according to an example. Figure 1b depicts that data sources that are sources of textual data can be used with a pre-processing component 1001 in order to extract keywords and topics and so on, using well-known techniques for the extraction of such data from text. For example, terminological candidates can be extracted using known linguistic processing algorithms. Data from other sources 1003, such as organizational charts, calendar entries and so on, which are not as heavily reliant on textual information can be input directly to the network 1003 to augment a graph structure.

According to an example, a method for mining contextual information includes:
Data from all the considered sources 103 are transformed into graph data (i.e. nodes connected by edges) and integrated following the flexible approach based on a complex information network (nodes representing data objects, linked by edges representing relations).

All data objects like people, documents (chat messages, emails, patents, blog posts, and so on), and events (meetings, calls, and so on) are represented by nodes in the network. These nodes are connected by edges representing authorship of documents, participation in meetings and calls, but also people-to-people relations like reports-to and is-manager-of and so on. Data objects can be derived from structured datasets as well as unstructured text data.

The set of nodes and relations depends on the considered sources and the contents and other data derived therefrom. A particular characteristic of this approach is that the range of node types (i.e. integrated sources) as well as edge types (i.e. considered relations) can be extended and modified arbitrarily without requiring major changes of other components.

In addition to the raw data, offline pre-processing is used to enrich the data further. In particular, text-mining methods can be used to determine topics of documents, ideally also of meetings (requires annotations) and calls (requires speech-to-text techniques). For example, the LDA method [Blei, Ng, Jordan, "Latent Dirichlet Allocation", J. Machine Learning Research, 2003, pp. 993-1022] uses a bag-of-word approach based on the statistics of co-occurrence of terms. That means, terms that frequently co-occur in all messages observed so far are considered a topic - and each newly incoming message can be assigned one or several of such topics based on the terms itself contains. Other methods, such as Kanopy [Hulpus, Hayes, Karnstedt, Greene, "Unsupervised graph-based topic labelling using DBpedia", WSDM, 2013], follow a similar approach but in addition link terms to concepts of a knowledge base like Wikipedia. This increases the ability to semantically interpret the resulting topics. Each topic is again represented as a node in the information network and connected by edges to other corresponding nodes. This provides enhanced linkage information between the entities in the network and is used to identify inherent relations between them.

As with the nodes representing raw data, the types of these implicit nodes are not *a priori* limited by the approach. As an example, one can also extract important keywords from each message using an approach like KEA [Witten, Paynter, Frank, Gutwin, Nevill-Manning, "KEA: practical automatic keyphrase extraction", ACM DL 1999]. These keywords represent different types of meta-data that can be directly added to the graph in order to enhance linkage information. That is, in an example, for various textual data sources, meta-information such as topic, semantics and so on is extracted from the text and this meta-information is used to integrate the information from these sources in the graph.

The resulting complex information network is persistently managed and maintained in the storage component 107. This component employs a graph-storage solution that is particularly scalable (e.g. by exploiting distribution and cluster computing) and that supports incremental updates (e.g. by implementing on-line and streaming techniques). For example, persistence and resilience can be provided by using known NoSQL solutions such as distributed key-value stores (e.g., Titan on top of Cassandra) and native graph databases (e.g., Neo4J cluster).

Figure 1c is a schematic representation of a distributing storage system according to an example. A graph or network 1010 is stored over multiple storage devices 1011a-c. Devices 1011a and 1011b can be provided a one location 1013, whilst device 1011c can be provided at another location 1015 for example. The locations can be geographically remote one another. Other devices, 1011d-e, can be provided at the location 1015 but which are used for other purposes for example. Alternatively, the graph 1010 can extend to these devices as it grows.

The Graph can be scaled out on demand using parallel and distributed techniques. The graph can be updated with each new occurring event, i.e., add corresponding nodes and edges as described above for each new event. Optionally, nodes corresponding to older events can be removed from the graph.

Initially, an un-weighted graph resides on the persistent scalable storage (e.g., on a combination of disks in an out-of-core system or distributed file system or a distributed in-memory system). An indexing scheme (distance oracle) is created on top of the graph that enables highly accurate distance estimates between node pairs in very little time. In recent years, some good distance oracles have been proposed to create such indices efficiently even for the graphs residing in the persistent storage. If the storage of the resultant indexing scheme is small enough to fit in the main memory of a single machine, the index is kept in-memory; otherwise the distance oracle can also be kept on the persistent scalable storage as well (at the cost of slightly slower queries). The distance oracle is dynamically updated when new nodes and edges are added and old nodes and edges are removed.

To mine the context between nodes in real-time, the distance index is used to identify a subgraph that is relevant for determining the context. For instance, a context for query node q1, ... ,qk may be restricted to paths of certain length L as context based on longer paths may be considered too complex to be meaningful. In this case, the relevant subgraph S would consist of nodes and edges that are within distance L of all query nodes q I, ... ,qk, i.e., at the intersection of L-hop neighbours of these query nodes. To compute this efficiently, a traversal is performed from a query node (say q1). The distance indices are used to determine which of its neighbours have a distance less than L from all the remaining query nodes (q2, ... ,qk). These nodes are included in the relevant subgraph S. Next, the neighbours of newly inserted nodes in S are considered and a similar analysis is done to determine which of these neighbours are within L-hop distances from all the remaining query nodes. The process is repeated until no new nodes are inserted in S. At that stage, the subgraph S has been completely characterized.

The relevant subgraph is generally much smaller than the whole graph. Therefore, this can be loaded into the main memory of a single machine. The subgraph can be mined in real-time in order to determine a context for an input query. The real-time component 109 responsible for extracting relevant contextual information on demand is directly accessing the persistent storage 107 and can exploit in-memory processing support.

In an example, relevant contextual information is provided by paths of arbitrary length between nodes, since such paths represent complex relations between the data objects relevant to a communication event. In order to process data in real-time, parallel graph traversals can be executed to extract the top-N paths from the network, where N is a predetermined integer value (e.g. 1-3). For example, sequential k-shortest path algorithms (e.g., [Katoh, Ibaraki and Mine, "An Efficient Algorithm for K Shortest Simple Paths", NETWORKS 1982]) can be combined with parallel delta-stepping shortest path algorithm [Meyer, Sanders "Delta Stepping: A parallel single source shortest path algorithm", ESA 1998] for this purpose.

Relations between data objects are weighted on demand in the moment the communication event occurs. As an example, consider a chat message from user A to user B. User B experiences true benefit only if the system is able to identify entities (such as other chats or emails) explicitly related to the particular incoming message. This can only be achieved using on-the-fly topic extraction and corresponding weighting of the relations that already exist in the network.

Paths are combined to sub-graphs in order to be able to exploit the real value of complex contextual information. Identifying a sub-graph of entities related to an "incoming topic", e.g. encompassing all relevant documents as well as meetings, is of higher value than any of the single entities alone. The underlying techniques for on-demand weighting, extraction and ranking in real time from a large complex network are not available in the systems of today.

According to an example, once a restricted subgraph consisting of the context is identified and loaded in the main memory, all its edges and/or paths are assigned weights. The purpose of assigning these weights is to ascertain the relevance of the different context represented by different paths. These weights can either be determined based on domain knowledge and user experience (e.g., an email sent recently on the same topic may be considered a more relevant context than a blog written on a similar topic in the internal company social networking site long while ago; the weight on the edges/paths can reflect this logic) or can be learnt automatically by a supervised learning methodology with a training dataset.

In this dataset, each contextual path is an observation, associated with different path features such as the number of nodes of type Person or Topic, the length of the path, the number of interactive edges between Person and Topic, etc. The contextual path weight is an un-estimated function of the above features and also features of the dynamic event such as the message timestamp and message topic in the chat example. Each contextual path in the dataset also has a ranking, indicating how relevant that path to the dynamic event. Hence, a regression model, either linear or non-linear, can be used to learn the correlation between labelled rankings and the path features. As path features can be constructed as a combination of node and edges weights, learning the above regression model is equivalent to learning the dynamic weight assignment.

With the correct weighting scheme, the problem of determining the relevant context becomes a problem of computing the appropriate path. The later problem can be solved in real-time by careful selection and engineering of parallel graph algorithms (described below in more detail). To mine the appropriate subgraphs in real-time, an in-memory graph system can be used that leverages multicore parallelism (e.g., Galois [Pingali et al. "The tao of parallelism in algorithms" SIGPLAN 2011], Ligra [Shun, Blelloch "Ligra: A lightweight graph processing framework for shared memory" PPoPP, 2013]).

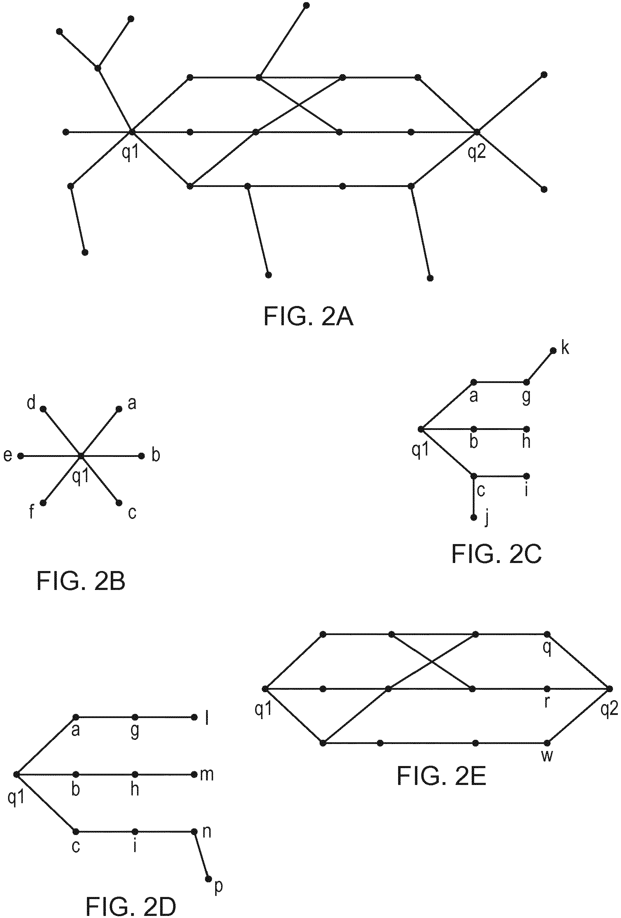

Figures 2a-e are schematic representations of the determination of a subgraph for an input query according to an example.

Figure 2a is an input graph in which two query nodes are depicted along with the corresponding graph structure that links the nodes. In the example of figure 2, the subgraph S is defined to be all paths of length 5 (5 edges, 4 nodes) between q1 and q2. That is, the context for the input query is defined in terms of the subgraph that is derived using a distance measure that enables paths between query nodes to be mined. k different contexts can be obtained by considering k-shortest paths as described above. Alternatively, a path type can be defined based on some prior knowledge. In that case, we compute the paths of a certain type. For example, we may only be interested in context of type "Caller sent me a email few minutes ago" and we only consider path s of type Caller - Email - Caller. That is where a path is defined between data objects of a certain type, with a set of specified data object types therebetween.

For example, with reference to figure 2b, the neighbours of q1 are checked by a distance oracle to see if their distance from q2 is less than or equal to 4. Nodes a, b and c pass the test, while the nodes d, e and f fail. For the nodes (a, b and c) that pass the test, their neighbourhood is then explored. As depicted in figure 2c, if the distance of these neighbours (a, b and c) from q2 is less than equal to 3 then those nodes that pass this test are explored in a subsequent step in an analogous way. Eventually, all nodes that pass the test comprise the subgraph S that we wanted to discover. This subgraph then defines the context.

That is, with reference to figure 2c, nodes g, h and I, are within the distance measure (3 from q2) and are accordingly explored in a subsequent step illustrated in figure 2d, whereas nodes j and k are not. For example, in figure 2d, nodes I, m and n pass the test, but node p does not (as it is more than two hops from q2). As noted in figure 2e, nodes q, r and w are also within the subgraph. The subgraph depicted in figure 2e shows multiple paths between the query nodes. Each path represents a different context in view of the differing nature and content of the data objects (nodes) that lie on the various paths.

Accordingly, a subgraph is identified and this subgraph in turn defines the context that is output. So, the subgraph is a tool that is used for the final output, which is context. It is not the case that context is mined to provide a subgraph.

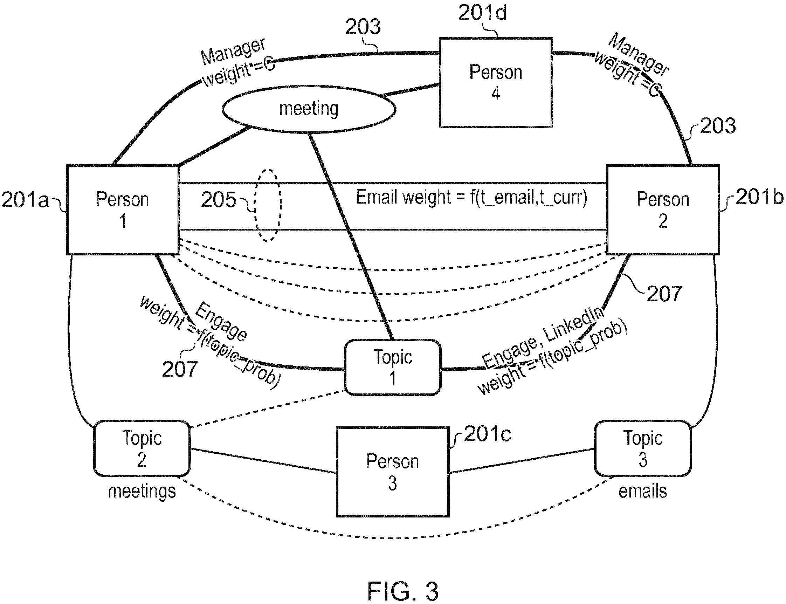

Figure 3 is a schematic representation of a simplified example network that illustrates the approach according to an example.

The figure depicts four nodes (201a-d) representing persons, relations between them (certain entities like documents are excluded for brevity), as well as nodes representing common topics and a scheduled meeting. For the case of Person I contacting Person 2, potentially relevant contextual information is indicated by sub-graph defined by the bold edges. That is, a meeting between Person 1 and Person 4, who is the common manager of both Person 1 and Person 2, where the meeting is on a topic that links both participants of the communication (e.g. a discussion in the internal social-media platform).

In addition, figure 3 shows the weights that are assigned to the different edges. In this example, the edge 203 for manager relationship is defined to have a fixed constant weight, C. The edges 205 corresponding to emails have some function of the email timestamp and the current time as their weight. For the edges 207 leading to topics, their weights are defined to be a function of the probability that the text belongs to a topic. In an example, this probability is obtained during the computation of topics. Here, the text can be a blog (e.g., from an internal company social network such as Engage) or online profile (e.g., on Linkedln) or Email or a chat message that has been sent or received. Similarly, in the case of person to topic edge, it uses the probability that this person has an expertise on that topic. Again, this probability can be computed while discovering the topics.

The weights are computed on-demand at the time of query. This enables the output context to consider the nature of the actual event and the exact circumstances at query time in order to decide about the nature and relevance of different contexts.

The weights on the edges are calculated based on some predefined functions. For example, at the beginning of the deployment, these functions can be manually defined for each edge type. For instance, a function for the weight of edges from Email Address to Email Message can be defined as f(t_current, t_email) = (t_current - t_email)/10. Here, t_current is the time (in minutes) of the query and t_email is the time when the email is sent. Note that t_email is stored with the edge, when the node Email Message and the edge between Email Address and Email Message is created. This function serves the intuition that the weight should be low if the email was sent recently (difference between query time and email sending time is small) and it should get higher as the Email Message becomes stale. These functions can be arbitrarily complex and can depend on any attribute stored with the edge or the incident nodes.

As the system gets more feedback from the users, these functions can be updated. Various strategies for defining these functions and their parameters can be tested on the users and the best one determined using their feedback.

The weight of a path is simply the sum of the weights of edges in the path. The subgraph that is used as a final context is carefully determined based on the exact application and any *a priori* information available about the users. For instance, it can be defined to be the shortest path (lightest weight path) between the query nodes. Or it can be defined to be a path of certain type (Person I - Email Address - Email Message - Email Address - Person 2) and the shortest path among all paths of this type. Or it can be defined to be a more complex subgraph (e.g., Steiner tree) between the multiple query nodes. Refer to the example in the communication event embodiment on Page 13, where the query consists of three Person nodes and 1 Email node.

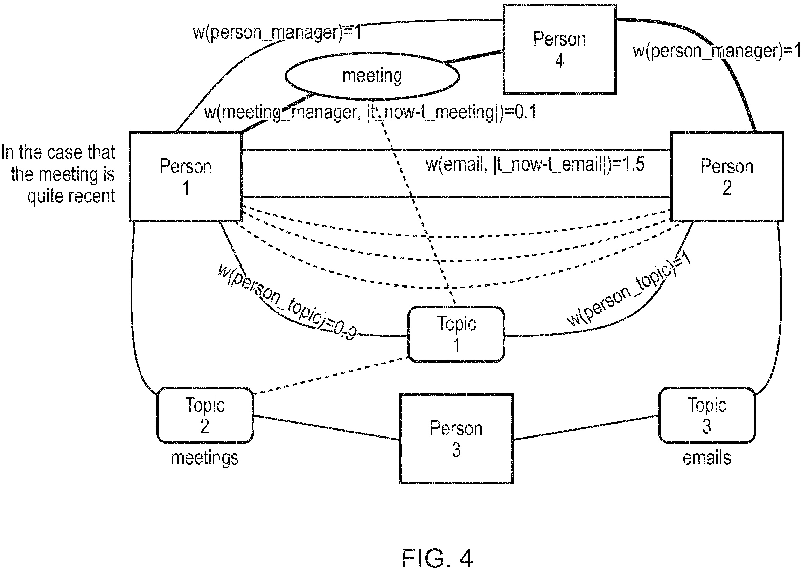

Figures 4, 5 and 6 are schematic representations of different contexts derived based on different weights according to an example. In Figure 4, an input query is to find the context between Person 1 and Person 2. The shortest path between Person 1 and Person 2 in this case is the path (shown in bold line) that traverses data objects (nodes) "Person 1 - Meeting-Person 4 - Person 2" and has distance (weight) 1.1. This corresponds to the context that Person 1 had a meeting with Person 4 a short while ago and Person 4 is the manager of Person 2. That is, the path with the lowest weight represents the shortest path between the input query nodes.

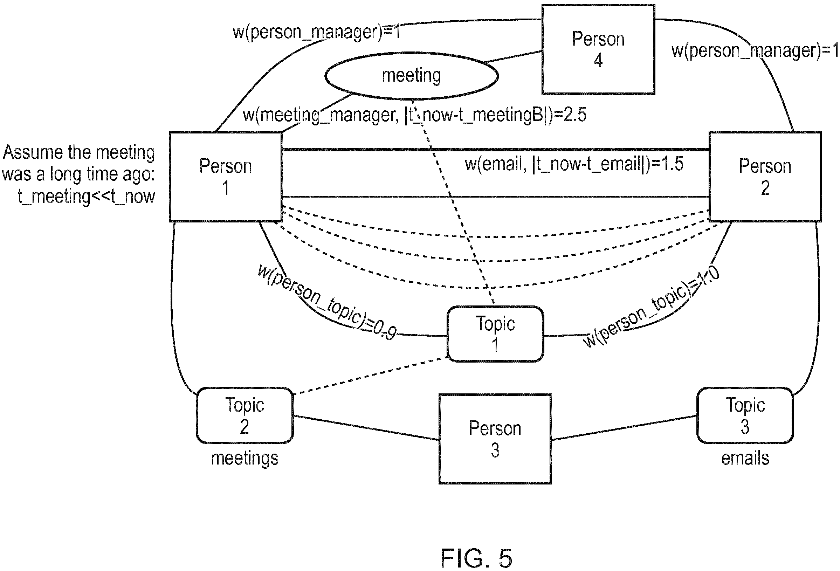

In Figure 5, the assumption is that the meeting happened a long while ago and the email is quite recent. In this case, the weight of the email edge is only 1.5 and this is the shortest path as the weight relating to the meeting has increased due to its age. thereby rendering that path 'longer' in terms of a relevant context for the input query. In this case, the best context (i.e. the most relevant context) is that Person 1 sent the email to Person 4 a short while ago. This path is again shown in bold line.

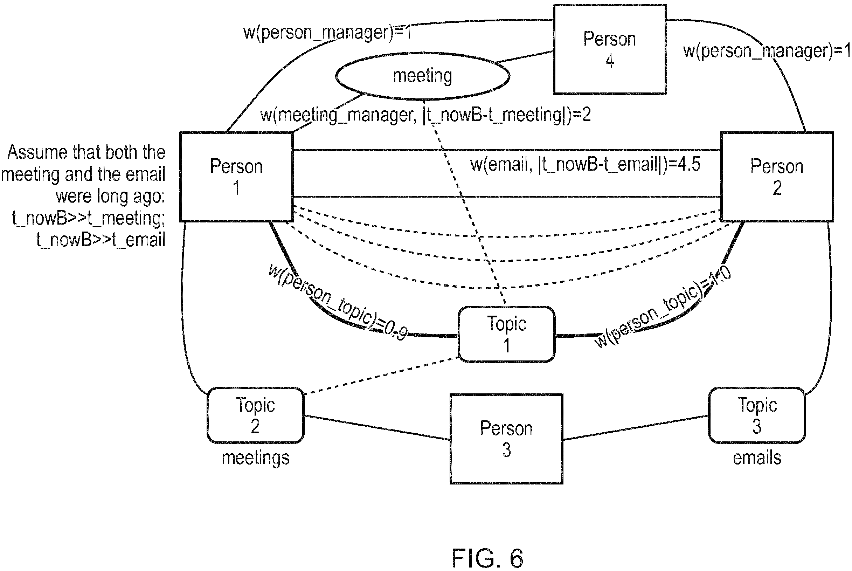

In Figure 6, both the meeting and email are very old, but Person 1 and Person 2 have both written some articles on the same topic recently. The probability that these articles are on this topic is very high (as computed by the text processing engine). Therefore, the weights of the meeting edge and the email edge is quite high. The shortest path here is "Person 1 - Topic 1 - Person 2" and therefore, the chosen context is that Person 1 and Person 2 have recently written on the same topic.

According to one example, the approach described herein can provide context at the time of a communication event (call, email message, chat message etc.). The communication event automatically triggers a query in the context engine. For instance, in case of a call between Person 1 and Person 2, there is a query for context from Person 1 to Person 2. The query is computed in real-time and the output context is provided to the callee before the call. In case of email from Person 1 to Person 2 and Person 3, the query is for context between four nodes - Email node, Person I, Person 2 and Person 3. The weights on the edges and therefore, the final output of the query is dependent on the time and the relevance of the email topic to the other text written and shared between Person I, Person 2 and Person 3. This is then provided to the receivers of the email.

The weights are calculated on-demand at query time. Calculating the weights on-demand enables the system to consider the nature of actual event and the exact circumstances at query time in order to decide about the nature and relevance of different contextual facts.

According to another example, the approach described herein can play a role is in a system that manages data streams, such as multimedia live streams for example. Similarly to a communication scenario, streams from a wide variety of sources and of different types, publishers of streams and potential subscribers, as well as explicit and implicit meta-data describing all these entities can be integrated into a complex information network. In analogy, real-time graph mining techniques can be used to identify relevant relations between streams, publishers and subscribers. This can be used to support on-demand search for relevant streams as well as for recommending existing streams that match the profile of subscribers.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method for providing contextual information for a query from input data deriving from multiple heterogeneous sources, the method comprising:
generating an undirected graph representing relationships between multiple data objects of the input data;
storing the graph in a persistent, scalable database;
processing the input data to generate semantic and/or meta data relating to the multiple data objects, and augmenting the graph to include additional nodes and/or edges representing relationships between the semantic and/or meta data and the data objects; and
monitoring the multiple heterogeneous data sources to dynamically update the graph.

2. A method as claimed in claim 1, further comprising:
processing the input data to determine data objects representing nodes for the graph, wherein a data object is a source of data comprising a document, person or event.

3. A method as claimed in claim 1 or 2, wherein for various textual data sources, meta-information is extracted from the text and used to integrate the information from these sources in the graph.

4. A method as claimed in any preceding claim, wherein multiple data objects are linked with weighted edges to represent a relationship between data objects.

5. A method as claimed in any preceding claim, further including:
determining, on-demand and in real-time, a set of paths between multiple nodes relating to the query, respective paths representing differing contextual information for the query.

6. A method as claimed in claim 5, further including:
determining a sub-graph for the multiple nodes relating to the query; and
mining the sub-graph in real-time to provide the contextual information for the query.

7. A method as claimed in claim in 6, wherein the respective paths of the sub-graph and/or edges between nodes of the sub-graph are weighted.

8. A method as claimed in claim 7, wherein a weight assigned to a path of the sub-graph and/or an edge between nodes of the sub-graph is a predetermined constant value or calculated using a variable function relating to the content of or a parameter associated with one or more data objects.

9. A method as claimed in claim 8, further including:
calculating a probability that the content associated with a data object relates to a topic.

10. A method as claimed in any of claims 7 to 9, further including:
adding meta-information to a path and/or edge between nodes of the sub-graph as a node representing a data object is added to the graph.

11. A method as claimed in any preceding claim, further including:
removing a node from the graph after a predetermined period of time calculated from a time of addition of the node.

12. An information processing system, comprising:
a processor being operable to:
receive and process input data deriving from multiple heterogeneous sources of data;
generate a query at the time of a communication event;
receive a query relating to contextual information associated with the input data;
generate an undirected graph representing relationships between multiple data objects of the input data;
store the graph in a persistent, scalable database;
process the input data to generate semantic and/or meta data relating to the multiple data objects, and modify the graph to include additional nodes and/or edges representing relationships between the semantic and/or meta data and the data objects; and
monitor the multiple heterogeneous data sources to dynamically update the graph.

13. An information processing system as claimed in claim 12, wherein the processor is further operable to:
determine a set of paths between multiple nodes relating to the query, respective paths representing differing contextual information for the query on demand in real-time.

14. An information processing system as claimed in claim 13, wherein the processor is further operable to:
determine a sub-graph for the multiple nodes relating to the query; and
process the sub-graph to provide the contextual information for the query by selecting a path according to an assigned weight for respective ones of the paths and/or edges between nodes in the sub-graph on-demand in real-time

15. A computer program product, comprising a computer usable medium having computer readable program code embodied therein, said computer readable program code adapted to be executed to implement a method for providing contextual information as claimed in any of claims 1 to 11.
